# EUROPEAN PATENT SPECIFICATION

(11) **EP 4 092 198 B1**
(45) Date of publication and mention of the grant of the patent: **26.11.2025**
(21) Application number: 22172969.2
(22) Date of filing: 12.05.2022
(51) Int. Cl.: E02D 5/30, F24T 10/00, F24T 10/13, E02D 5/52, F24T 10/15

(54) **A SPLICING ARRANGEMENT FOR JOINING TO EACH OTHER TWO REINFORCED CONCRETE PILES**
STOSS ZUM VERBINDEN ZWEIER STAHLBETONPFÄHLE MITEINANDER
DISPOSITIF DE RACCORDEMENT POUR JOINDRE DEUX PIEUX EN BÉTON ARMÉ

(30) Priority: 17.05.2021 FI 20215580
(43) Date of publication of application: 23.11.2022
(73) Proprietor: Leino, Jorma, 27250 Lappi (FI)
(72) Inventor: Leino, Jorma, 27250 Lappi (FI)
(74) Representative: Berggren Oy

(56) References cited:
- WO-A1-03/023150
- CN-U- 203 782 687
- CN-U- 210 421 075
- KR-A- 20160 110 291

## Description

### Object of the invention

The invention relates to a splicing arrangement according to claim 1 for joining to each other two reinforced concrete piles to be driven into the ground. The invention relates also to a reinforced concrete pile for use in the splicing arrangement.

Document KR 2016 0110291 A is background art which can be regarded as useful to understand the invention. It discloses a splicing arrangement comprising two reinforced concrete piles.

### Background of the invention

Deep foundations are often needed when building on a poor quality soil. The use of driven piles is a common way of making deep foundations. In pile driving, prefabricated piles are hammered into the ground by using a pile driving machine. Piles can be fabricated for example from wood, steel, or reinforced concrete. The length of piles depends on soil properties and the required load-bearing capacity of foundations. If there is just a short distance between soil surface and bedrock, piles can be driven to such a depth that the piles' bottom ends settle against the bedrock. In some cases, the friction between piles and surrounding soil can be high enough for attaining a sufficient load-bearing capacity, whereby the piles need not be driven all the way to bedrock.

Longer piles, if such are needed, are often assembled from shorter segments for facilitating transport and handling of the piles and enabling the piling also under bridges and in other locations with limited headspace above the ground. The pile segments can be otherwise identical to each other, except that the pile segment to be driven deepest into the ground is generally provided with a tip designed and strengthened to enable its easy penetration into the soil and to withstand the pile-driving stress. Often used in relation to reinforced concrete piles are pile shoes attachable to the lowermost piles. It is for the purpose of driving piles all the way to bedrock that special rock shoes are employed.

Piles are often joined to each other by using connecting pins passing through loops provided at the ends of piles and locking the piles to each other. The use of connecting pins involves a variety of problems. Any one of the connecting pins may be inadvertently or intentionally left uninstalled, reducing the joint strength. Connecting pins may also become loose as a result of vibration caused by installation strikes. Irregularities in a pile head-mounted steel plate may hamper installation of the connecting pins and the piling work is also slowed down by the installation of pins.

Piles can be equipped with heat transfer pipes, in which a heat transfer fluid can be circulated. The heat transfer pipes can be used for collecting heat from soil or storing heat in soil. It is by providing piles for example with a heat collection piping of the geothermal heating system that the construction of a separate heat collection pipe system is avoided in projects that would require the use of piling anyway.

The tightness of heat transfer pipes is important from the standpoint of both a functional heat collection or storage system and environmental protection. A challenge in pile driving is posed by the tightness of joints between the piles. Pile driving involves the use of major forces which may easily damage the joints with resulting pipe leaks. Particularly, when using piles equipped with heat transfer pipes, it is thus important that the piles are reliably secured to each other.

### Brief summary of the invention

It is an objective of the invention to provide an improved splicing arrangement for joining to each other two reinforced concrete piles to be driven into the ground, as defined by claim 1. A second objective of the present disclosure is to provide an improved reinforced concrete pile for use in said splicing arrangement (not claimed).

The splicing arrangement according to the invention comprises two reinforced concrete piles, a locking sleeve disposed on at least one of the arrangement's piles, the locking sleeve comprising a first locking groove, a dowel disposed on at least another of the arrangement's piles, said dowel being co-directional with a lengthwise direction of the piles and comprising a second locking groove disposed on an outer surface of the dowel, whereby the dowel is adapted to penetrate into the locking sleeve in the process of joining the piles to each other, at least two locking tabs which are adapted to become seated in the locking sleeve's locking groove and in the dowel's locking groove for preventing relative lengthwise movement of the piles, and one or more elastic elements, which have a cellular structure and which are disposed in the locking sleeve's locking groove and adapted to apply to the locking tabs a force which pushes the locking tabs towards the dowel's locking groove.

It is by means of a splicing arrangement of the invention that the use of connecting pins is avoided in a pile splice. In the process of joining piles to each other, the dowel penetrates into the locking sleeve and, by virtue of the locking tabs and the elastic element, the piles are locked automatically to each other. Hence, problems associated with the use of connecting pins are avoided.

According to one embodiment of the invention, the locking sleeve comprises a locking sleeve body and a locking sleeve cap attachable to the body, the locking sleeve's locking groove being disposed between the locking sleeve's body and cap. It is by virtue of the body and the cap being separate from each other that easy installation of an elastic element is enabled. The elastic element can also be given a sufficient stiffness for applying a sufficient force to the locking tabs.

As defined in claim 1, the elastic element has a cellular structure. It is by virtue of the cellular structure that the elastic element is provided with good elastic properties.

According to one embodiment of the invention, the elastic element is made of polyurethane.

According to one embodiment of the invention, the locking sleeve's locking groove is provided with one ring-shaped elastic element, which is adapted to apply a force to all locking tabs.

According to one embodiment of the invention, the number of locking tabs is at least three.

According to one embodiment of the invention, what in a lengthwise direction of the locking sleeve is an outer dowel-side angle of the locking sleeve's locking groove is acute. It is by virtue of the acute angle that a lengthwise movement of the piles subjects the locking tabs to a force, which effectively prevents the locking tabs from succumbing into the locking sleeve's slot and thereby ensures durability of the pile splice.

According to one embodiment of the invention, what in a lengthwise direction of the dowel is the outermost edge of the dowel's locking groove is inclined towards the dowel's most distal end, and the edges of the locking tabs, which come to rest against said edge of the dowel's locking groove, are inclined to a matching angle. It is by virtue of the inclination that the locking conforms to varying lengthwise clearances of the piles and the splice remains without play. According to one embodiment of the invention, the angle of inclination from a transverse direction of the dowel is 3-15 degrees.

According to one embodiment of the invention, the locking sleeve and the dowel are connected to the pile's reinforcement element.

According to one embodiment of the invention, the arrangement comprises at least two locking sleeve-dowel pairs.

According to one embodiment, the arrangement comprises four locking sleeve-dowel pairs.

According to one embodiment of the invention, the arrangement comprises two locking sleeves and two dowels in each pile.

In a reinforced concrete pile, intended for use in a splicing arrangement of the invention as defined above, the reinforced concrete pile's first end comprises at least one locking sleeve, and its second end comprises at least one dowel.

According to claim 13, the pile comprises, inter alia, at least one heat transfer pipe for circulating a heat transfer fluid in the pile, at least one of the reinforced concrete pile's ends constituting a splicing end by which splicing end the pile is connectible to another identical or similar pile for constructing a longer pile assembly, and whereby, at said splicing end, said at least one heat transfer pipe is adapted to be connected to a respective heat transfer pipe of the pile to be coupled with the discussed splicing end and, at the pile's splicing end, the heat transfer pipe is surrounded with an elastic jacket. The splicing arrangement of the invention is particularly useful in piles equipped with heat transfer pipes, wherein the reliability of a splice is important.

### Description of the drawings

Embodiments of the invention will be described hereinafter in more detail with reference to the accompanying drawings, in which
fig. 1 shows, in a simplified view, two interlocked reinforced concrete piles in cross-section,
fig. 2 shows components of two interlocked reinforced concrete piles without the actual concrete casting,

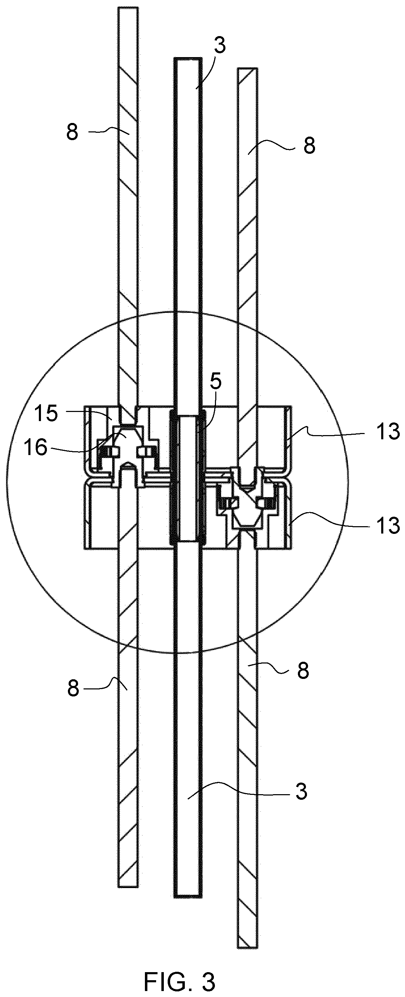

fig. 3 shows a cross-section of fig. 2 along a line A-A, and

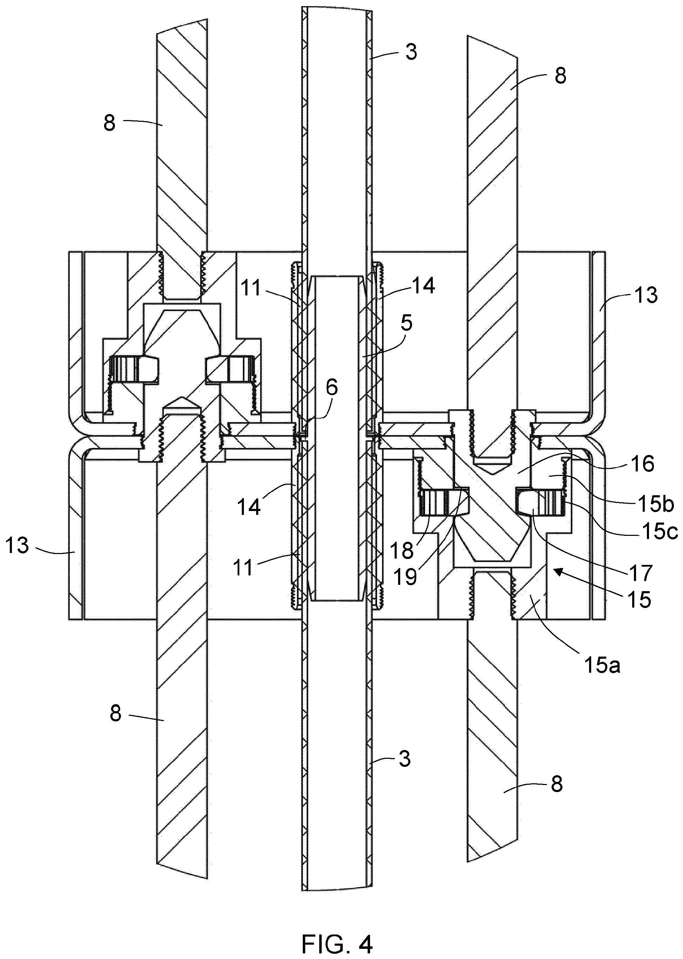

fig. 4 shows, in an enlarged view, details of fig. 3.

### Detailed description for embodiments of the invention

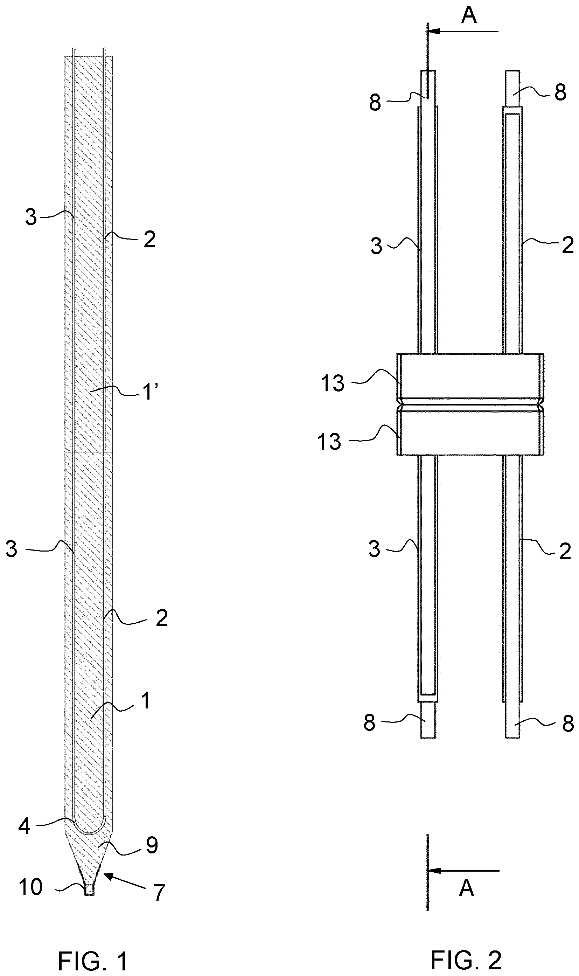

Fig. 1 shows, in a cross-section view, two interlocked reinforced concrete piles 1, 1' according to certain embodiments of the invention. The reinforced concrete piles 1, 1' of the invention can be used in deep foundations to support a building or the like structure. In addition to building foundations, the piles 1, 1' could be used for example under the roadway. The pile 1,1' is driven into the soil to such a depth that the pile's 1,1' tip makes contact with bedrock or that the friction between soil and pile is high enough to bear the required load. A wide variety of pile driving machines can be used for hammering the pile 1, 1' into the ground. Generally speaking, in pile driving, the end face of a pile is subjected to strikes by the force of which the pile 1, 1' is driven into the ground. The pile driving machines may utilize for example a heavy load, compressed air, or hydraulic pressure for applying a force to the end of the pile 1, 1'. A wide variety of pile driving machines and pile driving methods are known, not warranting more detailed description at this time.

The length required of piles 1, 1' varies according to soil properties encountered in various project sites. Likewise, piles 1, 1' of varying lengths are often needed in a single construction site. Fabrication of piles in unequal lengths is not practical. Long piles 1, 1' are also inconvenient in terms of transport and handling. Moreover, in certain construction sites, such as under bridges and other structures, the vacant headspace above a pile driving site may be limited. Therefore, piles are preferably manufactured in predetermined lengths and, should longer piles be needed, two or more piles will be connected together for obtaining a pile of appropriate length. In fig. 1 there is depicted two piles 1, 1' connected to each other. The lower pile 1 of fig. 1 can be used in foundations as a lowermost pile. The upper pile 1' of fig. 1 can be attached to the lower pile 1 for obtaining a longer pile assembly. Several piles similar to the upper pile 1' could be attached in succession to the pile assembly for obtaining a pile of required length.

Fig. 2 depicts components for the piles 1, 1' of fig. 1 without the actual concrete casting of the piles. The pile's 1, 1' body portion is made of concrete and provided with at least one reinforcement element 8. The reinforcement elements 8 extend almost through the entire concrete component in a longitudinal direction of the pile 1 and are made of steel. In the illustrated embodiments, each pile 1, 1' is provided with four reinforcement elements 8 of ribbed steel. The number of reinforcement elements 8 could also be something else. Thus, the number thereof could be more or fewer than four. The appropriate number of reinforcement elements 8 depends on the dimensions of a pile and the strength required thereof. The reinforcement elements 8 need not be straight as other types of reinforcement elements 8 could be used as well. The reinforcement elements 8 can be attached to each other with a binding wire.

The pile 1, 1' comprises, in its lengthwise direction, a first end and a second end. When the pile 1, 1' is driven into the ground, the first end constitutes a bottom end of the pile 1, 1' and the second end constitutes a top end of the pile 1, 1'. The lower pile 1 of fig. 1 is configured to be used as a first or lowermost pile, which is hammered into the ground. The pile 1 has its first end tapered to assist pile driving into the ground. In the example of fig. 1, the tapered end comprises a pyramidal part 9 and a cylindrical part 10, the latter constituting a tip of the pile 1. The pile's 1 concrete component is protected by a pile point 7, which is manufactured in steel. The cylindrical portion 10 at the end of the pile 1 is disposed on the pile point 7. The pile point 7 further includes a collar element, which surrounds the end of the pile's 1 concrete casting and has an interior shape which matches an exterior shape of the concrete component. The pile point 7 can be provided with gripping means by means of which it can be secured to the concrete component of the pile 1. The pile point 7 can be attached to the pile 1 during a pile casting process.

In the illustrated example, each pile 1, 1' is provided with at least one heat transfer pipe 2, 3. The heat transfer pipes 2, 3 can be used for circulating a heat transfer fluid for transferring heat from soil to heat transfer fluid or vice versa. The heat transfer fluid can be for example an ethanol- or glycol-based liquid. Hence, the pile 1, 1' can be used as part of a geothermal heating system or for storing heat in the soil. It is by virtue of the heat transfer pipes 2, 3 that the drilling of separate heat collection or storage wells, or the burying of heat transfer pipes in the ground, can be avoided or at least the need thereof can be mitigated.

In the illustrated embodiments, each pile 1, 1' is provided with two heat transfer pipes 2, 3. One of the heat transfer pipes 2, 3 functions as a supply pipe by which the heat transfer fluid is delivered into the pile 1, 1' and the other of the heat transfer pipes 2, 3 functions as a return pipe along which the heat transfer fluid returns to the top end of the pile 1, 1'. In the lower pile 1 of fig. 1, the heat transfer pipes 2, 3 are joined together at a first or bottom end of the pile. Thus, the pipes 2, 3 make up a U-shaped continuous pipe. At a second or top end of the pile 1, the ends of the pipes 2, 3 are open. Instead of a U-shaped pipe, the pile's 1 heat transfer pipe could be in a different configuration, for example in a spiral shape. The spiral pipe would enable a longer pipe to be fitted in the pile 1, thereby increasing the pipe's heat transfer surface area. The pile 1 could also be provided with several heat transfer pipes. The heat transfer pipes 2, 3 may comprise for example plastic piping.

The upper pile 1' includes two separate heat transfer pipes 2, 3. Both heat transfer pipes 2, 3 extend in a lengthwise direction of the pile 1' from a second end to a first end of the pile 1'. The first heat transfer pipe 2, functioning as a supply pipe, is provided at a second end of the pile 1' with an inlet and at a first end of the pile 1' with an outlet. Respectively, the second heat transfer pipe 3, functioning as a return pipe, is provided at a first end of the pile 1' with an inlet and at a second end of the pile1' with an outlet. The heat transfer fluid may flow in the upper pile's 1' first heat transfer pipe 2 from the pile's 1' top end towards its bottom end and continue from there into the lower pile's 1 first heat transfer pipe 2. Respectively, the heat transfer fluid may flow from the lower pile's 1 second heat transfer pipe 3 into the upper pile's 1' second heat transfer pipe 3 and from there further towards the upper pile's 1' top end and to the second heat transfer pipe's 3 outlet. The supply pipe 2 and the return pipe 3 can be identical to each other. Hence, the inlet and the outlet may likewise be identical to each other and formed by open ends of the heat transfer pipe 2, 3.

The lower pile 1 of fig. 1 has its second end provided with an inlet for the heat transfer pipe 2, thereby enabling heat transfer fluid to be supplied via the outlet of the upper pile's 1' supply pipe 2 into the heat transfer pipe 2 functioning as a supply pipe for the lower pile 1. The heat transfer fluid flows in the heat transfer pipe 2 towards the pile's 1 first end. It is by way of a connecting pipe 4, disposed in the lower pile 1 of fig. 1 in the proximity of the pile's 1 first end, that the heat transfer fluid is able to flow into the second heat transfer pipe 3 functioning as a return pipe, and to continue therealong towards the pile's 1 second end. The pile 1 has its second end provided with an outlet for the second heat transfer pipe 3. From there, the heat transfer fluid is able to flow into the upper pile's 1' heat transfer pipe 3 functioning as a return pipe. The lower pile's 1 heat transfer pipes 2, 3 and the connecting pipe 4 can be constructed as a continuous pipe.

Depending on a required total pile length, the pile assembly may comprise one lowermost pile 1 provided with a pile point 7, and one or several piles similar to the upper pile 1' attached on top of each other. The heat transfer pipes of what in the pile assembly is the uppermost pile 1' can be connected to an appropriate apparatus such as a heat pump.

At least one end of each pile 1, 1' is provided with splicing means for connecting the pile 1, 1' rigidly to the next pile. The term "rigidly" indicates in this context that the splice between the piles 1, 1' is capable of resisting rotation of the upper pile 1' relative to such an axis which is co-directional with end faces of the piles 1, 1'. The rotation of a pile 1, 1' relative to a longitudinal axis of the piles 1, 1' is also prevented. Likewise, the rigid joint resists tension in a lengthwise direction of the piles 1, 1'. Regarding the piles of fig. 1, it is in the lower pile 1 that the pile 1 has just its second end provided with splicing means. In the upper pile 1', at least the first end is provided with splicing means for attaching it to the lower pile 1. If the number of piles installed on top of each other is three or more, the piles intended between two piles have both ends provided with splicing means.

In the illustrated embodiment, the lower pile 1 has its top end and the upper pile 1' has at least its bottom end provided with an end closure 13. The end closure 13 is made of a sheet material such as steel, and it comprises an end plate disposed against the end of the pile's 1, 1' concrete component, as well as a collar which surrounds the pile's 1, 1' concrete component. The purpose of end closures 13 is to protect the ends of the piles 1, 1' during transport and handling thereof. However, the end closures 13 are not absolutely necessary as the piles 1, 1' could also be constructed without them. Instead of the end closures, the piles 1, 1' could also be equipped with a collar surrounding at least one end of the pile 1, 1' or with an end plate placed against an end face of the pile 1, 1'.

The pile's 1, 1' heat transfer pipe 2, 3 is coupled to a respective heat transfer pipe 2, 3 of the next pile 1, 1' by means of a connecting sleeve 5. The connecting sleeve 5 is adapted to be fitted inside the heat transfer pipes 2, 3. Accordingly, the connecting sleeve 5 has an outer diameter which is smaller than the heat transfer pipe's 2, 3 inner diameter. The connecting sleeve 5 is installed so as to extend in a joint of the heat transfer pipes 2, 3 into the interior of both pipes 2, 3. In the illustrated embodiment, the connecting sleeve 5 is provided with a flange 6. The flange 6 surrounds an external surface of the connecting sleeve 5. The flange 6 of a connecting sleeve 5, fitted between two piles 1, 1', bears against the end faces of both piles' 1, 1' heat transfer pipes 2, 3 and thereby retains its fixed position in the joint. The connecting sleeve 5 has both of its ends chamfered on the connecting sleeve's 5 external surfaces for easier installation of the connecting sleeve 5. The joint between heat transfer pipes 2, 3 can be constructed by installing a connecting sleeve 5 at the end of a heat transfer pipe 2, 3 by pushing it into the heat transfer pipe 2, 3 to such a depth that the connecting sleeve's 5 flange 6 comes against the heat transfer pipe's 2, 3 end face. The joint between heat transfer pipes 2, 3 can be sealed with appropriate gaskets. The gaskets can be set for example in grooves made in the connecting sleeve's 5 external surface along a section of each pile 1, 1', or on the surfaces of the connecting sleeve's 5 flange 6.

Hereinafter, such an end of the pile 1, 1', which is adapted to be coupled to an end of another corresponding pile 1, 1', shall be referred to as a splicing end. Thus, what is the top end on the lowermost pile in a pile assembly constitutes a splicing end and, respectively, at least what is the bottom end on the uppermost pile constitutes a splicing end. In a pile to be fitted between two piles, both ends constitute a splicing end.

In the illustrated embodiment, the heat transfer pipe 2, 3 is at the pile's 1, 1' splicing end surrounded by an elastic jacket 11. Accordingly, in the illustrated example, it is at a top end of the lower pile 1 that each of the heat transfer pipes 2, 3 is surrounded by an elastic jacket 11. As for the upper pile 1', the heat transfer pipes 2, 3 are surrounded at least at a bottom end of the pile 1' by an elastic jacket 11. The elastic jacket 11 extends from an end of the heat transfer pipe 2, 3 over a certain distance towards a second end of the pile 1, 1'. The elastic jacket 11 can be adapted to extend for example to such a distance which is at least equal to the extent of a connecting sleeve 5 inside the discussed heat transfer pipe 2, 3. The elastic jacket 11 can be for example 50-200 mm in length. The elastic jacket can be manufactured for example from a material whose elastic modulus is less than 0.10 GPa. The material used for manufacturing an elastic jacket 11 can be for example cellular plastic. The elastic jacket 11 can be for example 1.0-5.0 mm in thickness. The elastic jacket 11 can be constructed as a continuous sleeve or as a sheet type element to be wrapped around the end of the heat transfer pipe 2, 3.

The elastic jacket 11 allows small lateral movements of the heat transfer pipe 2, 3 with respect to the pile's 1, 1' concrete casting. It is during the hammering of a pile 1, 1' that the pile 1, 1' is subjected to major forces which may cause lateral movements of the pile 1, 1'. These lateral movements may damage the joint between heat transfer pipes 2, 3. The elastic jacket 11 reduces the risk of joint damage and thereby contributes to continued tightness of the joint.

As for the part outside the section surrounded by the elastic jacket 11, the heat transfer pipe 2, 3 is disposed directly inside concrete casting. Thereby is ensured effective transfer of heat between the concrete casting and a heat transfer fluid flowing in the heat transfer pipe 2, 3.

The pile 1, 1' is further provided with a positioner sleeve 14. The positioner sleeve 14 is adapted to extend from an end face of the pile 1, 1' over a distance towards a second end of the pile 1, 1'. The positioner sleeve 14 can be attached by its distal end to the pile's 1, 1' end closure 13 or end plate. The heat transfer pipe 2, 3 is installed inside the positioner sleeve 14. The elastic jacket 11 is placed between the positioner sleeve 14 and the heat transfer pipe 2, 3. The positioner sleeve's 14 length can be selected so as to extend from the pile's 1, 1' end to approximately the same distance as the elastic jacket 11. The positioner sleeve 14 retains the end of a heat transfer pipe 2, 3 fixed in its position during the process of casting the pile 1, 1'.

The splicing arrangement of the invention for joining two piles 1, 1' to each other comprises a locking sleeve 15, which is disposed on at least one of the arrangement's piles 1, 1' and which is provided with a first locking groove 15c. The arrangement further comprises a dowel 16, which is disposed on at least another of the arrangement's piles 1, 1' and which is co-directional with a lengthwise direction of the piles 1, 1'. The dowel 16 has its external surface provided with a second locking groove 19, and the dowel 16 is adapted to penetrate into the locking sleeve 15 in the process of joining the piles 1, 1' to each other. The arrangement further comprises at least two locking tabs 17, which are adapted to become seated in the locking sleeve's 15 locking groove 15c and in the dowel's 16 locking groove 19 for preventing relative lengthwise movement of the piles 1, 1', and at least one elastic element 18, which is disposed in the locking sleeve's 15 locking groove 15c and adapted to subject the locking tabs 17 to a force which pushes the locking tabs 17 towards the dowel's 16 locking groove 19.

In the illustrated embodiment, the locking sleeve 15 is fastened to a reinforcement element 8 of the pile 1, 1'. Respectively, the dowel 16 is also fastened to a reinforcement element 8 of the pile 1, 1'. In the illustrated embodiment, the ends of reinforcement elements 8 are provided with an external thread, and the dowel 16 as well as the locking sleeve 15 are provided with a matching internal thread for fastening the dowel 16 or the locking sleeve 15 to the reinforcement element 8. As an option, the fastening of a dowel 16 and a locking sleeve 15 to a reinforcement element 8 could be carried out for example by welding. In the illustrated embodiment, the dowel 16 is additionally provided with an external thread by means of which it can be fastened to an end closure 13 or to an end plate.

The dowel 16 and the locking sleeve 15 are dimensioned in such a way that the dowel 16 fits in and is able to penetrate into the interior of the locking sleeve 15. In the illustrated embodiment, the splicing arrangement comprises three locking tabs 17 in each locking sleeve-dowel pair. The locking tabs 17 are adapted to penetrate into the dowel's 16 locking groove 19 and to thereby prevent a movement of the dowel 16 relative to the locking sleeve 15 in a longitudinal direction of the piles 1, 1'. The locking sleeve 15 comprises a locking sleeve body 15a, and a locking sleeve cap 15b. The locking sleeve body 15a is provided with an internal thread and the locking sleeve cap 15b with a matching external thread for fastening the locking sleeve cap 20 to the locking sleeve body 15a. Between the locking sleeve body 15a and the locking sleeve cap 15c develops a groove 15c, in which the locking tabs 17 become seated in such a way that the movement thereof in a longitudinal direction of the piles 1, 1' is prevented.

The groove 15c, present between the locking sleeve body 15a and the locking sleeve cap 15b, is further provided with an elastic element 18. The elastic element 18 is adapted to subject the locking tabs 17 to a force which urges the locking tabs 17 into the dowel's 16 locking groove 19. The elastic element 18 is configured in such a way that the locking tabs 17 are able to penetrate into the groove 15c between the locking sleeve body 15a and the locking sleeve cap 15b in such a way that the locking tabs 17 are not seated in the dowel's 16 groove. This enables the dowel 16 to be pushed into the locking sleeve 15. The dowel's 16 end is designed to taper towards the end in such a way that, when the dowel 16 is pushed into the locking sleeve 15, the locking tabs 17 yield away into the locking sleeve's 15 groove 15c. When the dowel 16 is pushed sufficiently far, the elastic element 18 will be able to push the locking tabs 17 into the dowel's 16 locking groove 19, whereby the dowel 16 and the locking sleeve 15 become locked to each other and connect the piles 1, 1' together.

The locking sleeve cap 15b is not an absolutely necessary component as, instead, the locking sleeve 15 could also be constructed as a single body, having the groove 15c provided therein. However, the separate locking sleeve cap 15b facilitates installation of the elastic element 18 and enables the use of a stiffer elastic element and thereby a more securely locking joint. In the illustrated embodiments, the locking sleeve cap 15b is provided with a thread by means of which it can be fastened to an end closure 13 or to an end plate.

In the illustrated embodiment, the number of locking tabs 17 in each locking sleeve-dowel pair is three. The locking tabs 17 are in the shape of an annular segment.

The elastic element 18 is a ring-shaped object. The elastic element 18 can have a cellular structure. It is by virtue of a cellular structure that the elastic element 18 can be given appropriate elasticity. The elastic element 18 can be made for example from polyurethane. The elastic element 18 could also be made from some other suitable material such as metal, rubber, or plastic.

One side of the dowel's 16 locking groove 19 is inclined with respect to a transverse direction of the pile 1, 1'. The locking tab 17 has its respective side inclined in a corresponding manner. Hence, the dowel's locking groove 19 widens towards an outer periphery of the dowel 16 and the locking tab 17 tapers towards a center axis of the locking sleeve 15. In the figures, the side of the dowel's 16 locking groove 19, which is closer to the dowel's end, is inclined in such a way that the side's outer edge is closer to the end of the dowel 16 than the side's inner edge. The sides of the locking tabs 17, to be located closer to the dowel's end, are inclined to a matching angle. The angle of inclination from a transverse direction of the dowel 16 can be for example 3-15 degrees. Thus, the sides of a locking tab 17, to be located closer to the dowel's end, will be closer to the dowel's 16 end on the locking sleeve 15 side than on the dowel 16 side. It is by virtue of how the elastic element 18 and the locking groove 19 and the locking tabs 17 are designed that the joint between piles can be maintained without play.

In the illustrated embodiment, what in a lengthwise direction of the locking sleeve is the outer dowel-facing angle of the locking sleeve's 15 locking groove 15c is acute. If the piles 1, 1' are subjected to lengthwise forces, it is by virtue of the acute angle that movement of the locking tabs 17 is effectively prevented, thereby retaining the piles1, 1' firmly locked to each other.

The piles 1, 1' can be equipped with a necessary number of locking sleeve-dowel pairs. In the illustrated embodiment, each pair of piles connects to each other at four points. Thus, the joint comprises four locking sleeve-dowel pairs. Each splicing end of the pile 1, 1' is provided with two locking sleeves 15 and two dowels 16.

According to the prior art, the connecting of reinforced concrete piles to each other has been generally conducted by using locking pins, which are fitted in each joint transversely relative to a lengthwise direction of the piles. A problem with locking pins is a possible loosening thereof as a result of lateral pile movement or that installation of some locking pins is completely neglected, either intentionally or by mistake. The installation of locking pins may also be hampered by deformations generated in the end plate as a result of fastening the splice locking elements by welding. The problem has often been solved by using locking pins of reduced thickness, resulting in a compromised strength of the joint. The foregoing viewpoints may cause particular problems in piles equipped with heat transfer pipes, since the functionality of a pile joint has an impact on the functionality of a pipe joint as well. It is by using the above-described splicing means, based on dowels 16 and locking sleeves 15, for interlocking piles 1, 1' provided with heat transfer pipes 2, 3, that the functionality of pipe joints is ensured.

The piles 1, 1' are fabricated by casting. The casting is preceded by providing a mold. The mold used for casting is an elongated trough whose shape matches a desired shape of the piles 1, 1'. The mold has a bottom and side walls. The mold may also have one or two end walls. At least a part of the upper mold section is open for enabling the pouring of concrete into the mold. It is prior to the pouring of concrete into the mold that reinforcement elements 8 and heat transfer pipes 2, 3, 4 are disposed inside the mold and secured to appropriate locations. The fastening members and other components, such as end closures 13, needed at the ends of a pile 1, 1', are disposed on the end or ends of the mold. The concrete is poured into the mold and, once the cast pile has attained a required strength, the pile 1, 1' is removed from the mold.

It is obvious for a skilled artisan that the invention is not limited to the foregoing embodiments but is defined by the appended claims.

## Claims

1. A splicing arrangement for joining to each other two reinforced concrete piles (1, 1') to be driven into the ground, the arrangement comprising
- two reinforced concrete piles (1, 1'),
- a locking sleeve (15) disposed on at least one of the arrangement's piles (1, 1'), the locking sleeve (15) comprising a first locking groove (15c),
- a dowel (16) disposed on at least another of the arrangement's piles (1, 1'), said dowel (16) being co-directional with a lengthwise direction of the piles (1, 1') and comprising a second locking groove (19) disposed on an outer surface of the dowel (16), whereby the dowel (16) is adapted to penetrate into the locking sleeve (15) in the process of joining the piles (1, 1') to each other,
- at least two locking tabs (17) which are adapted to become seated in the locking sleeve's (15) locking groove (15c) and in the dowel's (16) locking groove (19) for preventing relative lengthwise movement of the piles (1, 1'), and
- one or more elastic elements (18), which have a cellular structure and which are disposed in the locking sleeve's (15) locking groove (15c) and adapted to apply to the locking tabs (17) a force which pushes the locking tabs (17) towards the dowel's (16) locking groove (19).

2. A splicing arrangement according to claim 1, wherein the locking sleeve (15) comprises a locking sleeve body (15a) and a locking sleeve cap (15b) attachable to the body (15a), the locking sleeve's (15) locking groove (15c) being disposed between the locking sleeve's body (15a) and cap (15b).

3. A splicing arrangement according to claim 1 or 2, wherein the elastic element (18) is made of polyurethane.

4. A splicing arrangement according to any of the preceding claims, wherein the locking sleeve's (15) locking groove (15c) is provided with one ring-shaped elastic element (18), which is adapted to apply a force to all locking tabs (17).

5. A splicing arrangement according to any of the preceding claims, wherein the number of locking tabs (17) is at least three.

6. A splicing arrangement according to any of the preceding claims, wherein what in a lengthwise direction of the locking sleeve is an outer dowel-side angle of the locking sleeve's (15) locking groove (15c) is acute.

7. A splicing arrangement according to any of the preceding claims, wherein what in a lengthwise direction of the dowel is the outermost edge of the dowel's (16) locking groove (19) is inclined towards the dowel's (16) most distal end, and the edges of the locking tabs (17), which come to rest against said edge of the dowel's locking groove (19), are inclined to a matching angle.

8. A splicing arrangement according to claim 7, wherein the angle of inclination from a transverse direction of the dowel (16) is 3-15 degrees.

9. A splicing arrangement according to any of the preceding claims, wherein the locking sleeve (15) and the dowel (16) are connected to the pile's (1, 1') reinforcement element (8).

10. A splicing arrangement according to any of the preceding claims, wherein the arrangement comprises at least two locking sleeve-dowel pairs.

11. A splicing arrangement according to claim 10, wherein the arrangement comprises four locking sleeve-dowel pairs.

12. A splicing arrangement according to claim 11, wherein the arrangement comprises two locking sleeves (15) and two dowels (16) in each pile (1, 1').

13. A splicing arrangement according to any of the preceding claims, wherein each of the piles (1, 1') comprises at least one heat transfer pipe (2, 3) for circulating a heat transfer fluid in the pile (1, 1'), at least one end of each of the reinforced concrete piles (1, 1') constituting a splicing end by which splicing end the pile (1, 1') is connectible to the other identical or similar pile of the splicing arrangement (1, 1') for constructing a longer pile assembly, and whereby, at said splicing ends, said at least one heat transfer pipe (2, 3) is adapted to be connected to a respective heat transfer pipe (2, 3) of the other pile (1, 1') of the splicing arrangement to be coupled with the discussed splicing end and, at the pile's (1, 1') splicing ends, the heat transfer pipe (2, 3) is surrounded with an elastic jacket (11).

## Patentansprüche

1. Spleißanordnung zum Verbinden von zwei in den Boden zu treibenden Stahlbetonpfählen (1, 1') miteinander, die Anordnung umfassend:
- zwei Stahlbetonpfähle (1, 1'),
- eine Verriegelungshülse (15), die auf mindestens einem der Pfähle der Anordnung (1, 1') angeordnet ist, wobei die Verriegelungshülse (15) eine erste Verriegelungsrille (15c) aufweist,
- einen Dübel (16), der an mindestens einem anderen der Pfähle der Anordnung (1, 1') angeordnet ist, wobei der Dübel (16) gleichgerichtet mit einer Längsrichtung der Pfähle (1, 1') ist und eine zweite Verriegelungsrille (19) umfasst, die an einer Außenoberfläche des Dübels (16) angeordnet ist, wodurch der Dübel (16) angepasst ist, um in die Verriegelungshülse (15) in dem Prozess des Verbindens der Pfähle (1, 1') miteinander einzudringen,
- mindestens zwei Verriegelungslaschen (17), die in die Verriegelungsrille (15c) der Verriegelungshülse (15) und in die Verriegelungsrille (19) des Dübels (16) eingesetzt werden können, um eine relative Längsbewegung der Pfähle (1, 1') zu verhindern, und
- ein oder mehrere elastische Elemente (18), die eine zellenförmige Struktur aufweisen und die in der Verriegelungsrille (15c) der Verriegelungshülse (15) angeordnet sind und geeignet sind, auf die Verriegelungslaschen (17) eine Kraft auszuüben, die die Verriegelungslaschen (17) in Richtung der Verriegelungsrille (19) des Dübels (16) drückt.

2. Spleißanordnung nach Anspruch 1, wobei die Verriegelungshülse (15) einen Verriegelungshülsenkörper (15a) und eine Verriegelungshülsenkappe (15b) umfasst, die an dem Körper (15a) angebracht werden kann, wobei die Verriegelungsrille (15c) der Verriegelungshülse (15) zwischen dem Verriegelungshülsenkörper (15a) und der Kappe (15b) angeordnet ist.

3. Spleißanordnung nach Anspruch 1 oder 2, wobei das elastische Element (18) aus Polyurethan hergestellt ist.

4. Spleißanordnung nach einem der vorstehenden Ansprüche, wobei die Verriegelungsrille (15c) der Verriegelungshülse (15) mit einem ringförmigen elastischen Element (18) bereitgestellt ist, das geeignet ist, eine Kraft auf alle Verriegelungslaschen (17) auszuüben.

5. Spleißanordnung nach einem der vorstehenden Ansprüche, wobei die Anzahl der Verriegelungslaschen (17) mindestens drei beträgt.

6. Spleißanordnung nach einem der vorstehenden Ansprüche, wobei in Längsrichtung der Verriegelungshülse ein äußerer dübelseitiger Winkel der Verriegelungsrille (15) der Verriegelungshülse (15c) spitz ist.

7. Spleißanordnung nach einem der vorstehenden Ansprüche, wobei in Längsrichtung des Dübels die äußerste Kante der Verriegelungsrille (19) des Dübels (16) zum distalsten Ende des Dübels (16) hin geneigt ist und die Kanten der Verriegelungslaschen (17), die an der Kante der Verriegelungsrille (19) des Dübels anliegen, in einem entsprechenden Winkel geneigt sind.

8. Spleißanordnung nach Anspruch 7, wobei der Neigungswinkel aus einer transversalen Richtung des Dübels (16) 3-15 Grad beträgt.

9. Spleißanordnung nach einem der vorstehenden Ansprüche, wobei die Verriegelungshülse (15) und der Dübel (16) mit dem Verstärkungselement (8) des Pfahls (1, 1') verbunden sind.

10. Spleißanordnung nach einem der vorstehenden Ansprüche, wobei die Anordnung mindestens zwei Verriegelungshülsen-Dübel-Paare umfasst.

11. Spleißanordnung nach Anspruch 10, wobei die Anordnung vier Verriegelungshülsen-Dübel-Paare umfasst.

12. Spleißanordnung nach Anspruch 11, wobei die Anordnung zwei Verriegelungshülsen (15) und zwei Dübel (16) in jedem Pfahl (1, 1') umfasst.

13. Spleißanordnung nach einem der vorstehenden Ansprüche, wobei jeder der Pfähle (1, 1') mindestens ein Wärmeübertragungsrohr (2, 3) zum Zirkulieren eines Wärmeübertragungsfluids in dem Pfahl (1, 1') umfasst, mindestens ein Ende jedes der Stahlbetonpfähle (1, 1') ein Spleißende bildet, über das der Pfahl (1, 1') mit dem anderen identischen oder ähnlichen Pfahl der Spleißanordnung (1, 1') verbunden werden kann, um eine längere Pfahlbaugruppe zu bilden, und wobei an den Spleißenden das mindestens eine Wärmeübertragungsrohr (2, 3) geeignet ist, mit einem entsprechenden Wärmeübertragungsrohr (2, 3) des anderen Pfahls (1, 1') der Spleißanordnung, der mit dem besagten Spleißende verbunden werden soll, und an den Spleißenden des Pfahls (1, 1') ist das Wärmeübertragungsrohr (2, 3) von einer elastischen Ummantelung (11) umgeben.

## Revendications

1. Agencement de raccordement pour joindre deux pieux en béton armé (1, 1') à enfoncer dans le sol, l'agencement comprenant
- deux pieux en béton armé (1, 1'),
- un manchon de verrouillage (15) disposé sur au moins l'un des pieux (1, 1') de l'agencement, le manchon de verrouillage (15) comprenant une première rainure de verrouillage (15c),
- une cheville (16) disposée sur au moins un autre pieu (1, 1') de l'agencement, ladite cheville (16) étant codirectionnelle avec une direction longitudinale des pieux (1, 1') et comprenant une seconde rainure de verrouillage (19) disposée sur une surface extérieure de la cheville (16), moyennant quoi la cheville (16) est adaptée pour pénétrer dans le manchon de verrouillage (15) lors du processus d'assemblage des pieux (1, 1') les uns aux autres,
- au moins deux pattes de verrouillage (17) qui sont adaptées pour s'insérer dans la rainure de verrouillage (15c) du manchon de verrouillage (15) et dans la rainure de verrouillage (19) de la cheville (16) pour empêcher le mouvement longitudinal relatif des pieux (1, 1'), et
- un ou plusieurs éléments élastiques (18), qui ont une structure cellulaire et qui sont disposés dans la rainure de verrouillage (15c) du manchon de verrouillage (15) et adaptés pour appliquer aux pattes de verrouillage (17) une force qui pousse les pattes de verrouillage (17) vers la rainure de verrouillage (19) de la cheville (16).

2. Agencement de raccordement selon la revendication 1, dans lequel le manchon de verrouillage (15) comprend un corps de manchon de verrouillage (15a) et un capuchon de manchon de verrouillage (15b) pouvant être fixé au corps (15a), la rainure de verrouillage (15c) du manchon de verrouillage (15) étant disposée entre le corps (15a) et le capuchon (15b) du manchon de verrouillage.

3. Agencement de raccordement selon la revendication 1 ou 2, dans lequel l'élément élastique (18) est réalisé en polyuréthane.

4. Agencement de raccordement selon l'une quelconque des revendications précédentes, dans lequel la rainure de verrouillage (15c) du manchon de verrouillage (15) est pourvue d'un élément élastique en forme d'anneau (18), qui est adapté pour appliquer une force à toutes les pattes de verrouillage (17).

5. Agencement de raccordement selon l'une quelconque des revendications précédentes, dans lequel le nombre de pattes de verrouillage (17) est d'au moins trois.

6. Agencement de raccordement selon l'une quelconque des revendications précédentes, dans lequel ce qui, dans une direction longitudinale du manchon de verrouillage, est un angle côté cheville extérieure de la rainure de verrouillage (15c) du manchon de verrouillage (15) est aigu.

7. Agencement de raccordement selon l'une quelconque des revendications précédentes, dans lequel ce qui, dans une direction longitudinale de la cheville, est le bord le plus extérieur de la rainure de verrouillage (19) de la cheville (16) est incliné vers l'extrémité la plus distale de la cheville (16), et les bords des pattes de verrouillage (17), qui viennent reposer contre ledit bord de la rainure de verrouillage (19) de la cheville, sont inclinés à un angle correspondant.

8. Agencement de raccordement selon la revendication 7, dans lequel l'angle d'inclinaison par rapport à une direction transversale de la cheville (16) est de 3 à 15 degrés.

9. Agencement de raccordement selon l'une quelconque des revendications précédentes, dans lequel le manchon de verrouillage (15) et la cheville (16) sont reliés à l'élément de renforcement (8) du pieu (1, 1').

10. Agencement de raccordement selon l'une quelconque des revendications précédentes, dans lequel l'agencement comprend au moins deux paires de manchons de verrouillage et de chevilles.

11. Agencement de raccordement selon la revendication 10, dans lequel l'agencement comprend quatre paires de manchons de verrouillage et de chevilles.

12. Agencement de raccordement selon la revendication 11, dans lequel l'agencement comprend deux manchons de verrouillage (15) et deux chevilles (16) dans chaque pieu (1, 1').

13. Agencement de raccordement selon l'une quelconque des revendications précédentes, dans lequel chacun des pieux (1, 1') comprend au moins un tuyau de transfert de chaleur (2, 3) pour faire circuler un fluide de transfert de chaleur dans le pieu (1, 1'), au moins une extrémité de chacun des pieux en béton armé (1, 1') constituant une extrémité de raccordement par laquelle extrémité de raccordement le pieu (1, 1') peut être reliée à l'autre pieu identique ou similaire de l'agencement de raccordement (1, 1') pour construire un ensemble de pieu plus long, et moyennant quoi, au niveau desdites extrémités de raccordement, ledit au moins un tuyau de transfert de chaleur (2, 3) est adapté pour être relié à un tuyau de transfert de chaleur respectif (2, 3) de l'autre pieu (1, 1') de l'agencement de raccordement pour être couplé à l'extrémité de raccordement discutée et, au niveau des extrémités de raccordement du pieu (1, 1'), le tuyau de transfert de chaleur (2, 3) est entouré d'une gaine élastique (11).
